# EUROPÄISCHE PATENTANMELDUNG

(11) **EP 2 037 193 A2**
(43) Veröffentlichungstag der Anmeldung: **18.03.2009**
(21) Anmeldenummer: 08016163.1
(22) Anmeldetag: 13.09.2008
(51) Int. Cl.: F24H 9/12

(54) **Pufferspeicher**

(30) Priorität: 14.09.2007 DE 102007044023
(71) Anmelder: Robert Bosch GmbH, 70442 Stuttgart (DE)
(72) Erfinder: Schaum, Daniel, 35457 Lollar (DE); Räder, Carsten, 35415 Pohlheim (DE)

(57) **Zusammenfassung**

Die Erfindung betrifft einen Pufferspeicher für den Anschluss an eine WarmwasserHeizungsanlage mit Wärmeerzeugerkreis und Wärmeverbraucherkreis.

Aufgabe der vorliegenden Erfindung ist es, einen Pufferspeicher zu schaffen, der bei gleichzeitiger Speicheraufladung und Wärmeanforderung die Vermischung von Speicherwasser mit dem vom Wärmeerzeuger kommenden Warmwasser sowie von dem aus der Heizungsanlage kommenden Kaltwasser mit Speicherwasser minimiert.

Der konstruktive Aufbau des Pufferspeichers 1 ist gekennzeichnet durch die räumliche Zuordnung und Gestaltung der Anschlussrohre für den Warmwasserzulauf 3 und/oder Kaltwasserzulauf 8 zu den Anschlussrohren für den Warmwasserauslauf 7 und/oder Kaltwasserauslauf 4, sodass bei laufender Wärmeerzeugung und Wärmeverbrauch der Druckverlust zwischen Warmwasserzulauf 3 und Warmwasserauslauf 7 und/oder zwischen Kaltwasserzulauf 8 und Kaltwasserauslauf 4 geringer ist als der Druckverlust zwischen Speicherwasser und Warmwasserauslauf 7 und/oder zwischen Speicherwasser und Kaltwasserauslauf 4. Dadurch ist sichergestellt, dass der vom Wärmeerzeuger 2 bereitgestellte Warmwasserstrom direkt und ohne Vermischung mit kühlerem Speicherwasser zum Wärmeverbraucher 6 fließt.

## Beschreibung

Die Erfindung betrifft einen Pufferspeicher für den Anschluss an eine Warmwasser-Heizungsanlage mit Wärmeerzeugerkreis und Wärmeverbraucherkreis nach dem Oberbegriff des Patentanspruches 1. Gleichwohl kann die Erfindung sinngemäß auch auf Kaltwasseranlagen mit Kälteerzeuger, Kältepuffer und Kälteverbraucher übertragen werden.

Pufferspeicher haben die Aufgabe, die Energiebereitstellung im Wärmeerzeugerkreis und den Energieverbrauch im Wärmeverbraucherkreis zeitlich voneinander zu entkoppeln. Pufferspeicher werden aufgeladen, indem das im Pufferspeicher befindliche kalte Speicherwasser im unteren Speicherbereich über das Anschlussrohr für Kaltwasserauslauf abgesaugt, in einem externen Wärmeerzeuger erwärmt und anschließend im oberen Speicherbereich über das Anschlussrohr für Warmwasserzulauf wieder zugeführt wird.

Bei einer Wärmeanforderung seitens des oder der Wärmeverbraucher (Raumheizung, Trinkwarmwasserbereitung) wird das im Pufferspeicher befindliche warme Speicherwasser im oberen Speicherbereich über das Anschlussrohr für Warmwasserauslauf entnommen, dem Wärmeverbraucher zugeleitet und dort abgekühlt und anschließend im unteren Speicherbereich über das Anschlussrohr für Kaltwasserzulauf wieder zugeführt.

Bei der Aufladung herkömmlicher Speicher findet regelmäßig eine Vermischung von Speicherwasser und dem aus dem Wärmeerzeuger kommenden Warmwasser statt. Das nach Einspeisung im Speicher vorliegende Wasser weist eine Mischtemperatur auf, die zwischen den Temperaturen des Speicherwassers vor Einspeisung und des vom Wärmeerzeuger kommenden Warmwassers liegt, und ist somit kühler als das vom Wärmeerzeuger kommende Wasser. Gemäß dem Stand der Technik ist bekannt, den Warmwasser- und Kaltwasserzulauf in den Speicher unter Verwendung von Prallblechen oder Rohrleitungselementen so vorzunehmen, dass eine möglichst verwirbelungsfreie Einspeisung erzielt wird. Aber auch wenn Speicheraufladung und Wärmeanforderung zeitlich zusammenfallen, findet eine Vermischung von dem aus dem Wärmeerzeuger kommenden Warmwasser mit Speicherwasser (oberer Speicherbereich) sowie von kaltem Rücklaufwasser aus der Heizungsanlage mit Speicherwasser (unterer Speicherbereich) statt. Damit sinkt die Vorlauftemperatur zum Wärmeverbraucher und steigt die Rücklauftemperatur zum Wärmeerzeuger - beide Phänomene sind unerwünscht, da dem Wärmeverbraucher nicht die volle vom Wärmeerzeuger generierte Exergie zur Verfügung gestellt wird, was einer Unterversorgung des Verbrauchers gleichkommt.

Von besonderer Bedeutung ist das zuvor Gesagte bei Wärmepumpen-Heizsystemen, die aus Gründen der Effizienz des Wärmepumpen-Kreisprozesses mit relativ geringer Temperaturspreizung zwischen Vorlauf und Rücklauf und hohen Volumenströmen arbeiten. Die hohen Volumenströme bringen den Nachteil von hohen Strömungsgeschwindigkeiten und Verwirbelungen mit sich, die eine freie Konvektion und damit auch eine temperatursensible Schichtung im Pufferspeicher stören.

Aufgabe der vorliegenden Erfindung ist es, einen Pufferspeicher zu schaffen, der bei gleichzeitiger Speicheraufladung und Wärmeanforderung die Vermischung von Speicherwasser mit dem vom Wärmeerzeuger kommenden Warmwasser sowie von dem aus der Heizungsanlage kommenden Kaltwasser mit Speicherwasser minimiert.

Erfindungsgemäß wird dies mit den Merkmalen des Patentanspruches 1 gelöst. Vorteilhafte Weiterbildungen sind den Unteransprüchen zu entnehmen.

Der konstruktive Aufbau des Pufferspeichers ist gekennzeichnet durch die räumliche Zuordnung und Gestaltung der Anschlussrohre für den Warmwasserzulauf und/oder Kaltwasserzulauf zu den Anschlussrohren für den Warmwasserauslauf und/oder Kaltwasserauslauf, sodass bei Betrieb der Umwälzpumpen im Wärmeerzeugerkreis und Wärmeverbraucherkreis der Druckverlust zwischen Warmwasserzulauf und Warmwasserauslauf und/oder zwischen Kaltwasserzulauf und Kaltwasserauslauf geringer ist als der Druckverlust zwischen Speicherwasser und Warmwasserauslauf und/oder zwischen Speicherwasser und Kaltwasserauslauf. Dadurch ist sichergestellt, dass der vom Wärmeerzeuger bereitgestellte Warmwasserstrom direkt und ohne Vermischung mit kühlerem Speicherwasser zum Wärmeverbraucher fließt. Auf der Kaltwasserseite ist gewährleistet, dass der vom Wärmeverbraucher zurückfließende kühle Wasserstrom direkt und ohne Vermischung mit Speicherwasser zum Wärmeerzeuger fließt. Das im Pufferspeicher befindliche Speicherwasser wird nicht oder nur geringfügig bewegt und dadurch in seiner temperatursensiblen Schichtung nicht gestört. Der Exergieverlust wird so minimiert.

Eine geeignete Ausführungsart sieht vor, dass die Anschlussrohre für Warmwasserzulauf und Warmwasserauslauf und/oder die Anschlussrohre für Kaltwasserzulauf und Kaltwasserauslauf sich bis in das Speicherinnere fortsetzen und einander direkt und im Einflussbereich der Zulauf- und Auslaufströmung innerhalb des Speichervolumens zugeordnet sind. So liegen die Eintritts- und Austrittsquerschnitte der Anschlussrohre im Speicherinneren im Wesentlichen einander gegenüber, wobei der Abstand zwischen Eintritts- und Austrittsquerschnitten sich etwa im Bereich von 0,5 bis 2 Rohrdurchmessern bewegt. Das vom Wärmeerzeuger kommende, einströmende Wasser strömt auf den Austrittsquerschnitt zu und wird weitgehend unvermischt über den Auslauf in Richtung des Wärmeverbrauchers abgeführt. Eine verbesserte Ausbildung der Zulauf- und Auslaufströmung ergibt sich durch einander zugeordnete Rohrbögen, Querschnittserweiterungen und/oder Diffusoren an den Eintritts- und/oder Austrittsquerschnitten der Anschlussrohre für Warmwasser und Kaltwasser. Die Zuordnung der Anschlussrohre für Warmwasser und/oder Kaltwasser kann des Weiteren durch einen diese Rohre hydraulisch verbindenden Rohrbogen im Speicherinneren geschehen; die Verbindung zum Speicherwasser erfolgt durch mindestens eine in der Anschlussrohrwand liegende Öffnung. Der Druckverlust zwischen Speicherwasser und Warmwasserauslauf und/oder zwischen Speicherwasser und Kaltwasserauslauf durch die jeweils mindestens eine Öffnung in der Anschlussrohrwand kann mittels starrer und/oder beweglicher Strömungsleitelemente (Schikanen, Sperrelemente, Drosselbohrungen) vor der Öffnung eingestellt werden, so dass der bevorzugte Strömungsweg auf der Warmwasserseite vom Wärmeerzeuger über den Warmwasserzulauf, durch das U-förmig gebogene Rohr zum Warmwasserauslauf und weiter zum Wärmeverbraucher, auf der Kaltwasserseite entsprechend vom kalten Anlagenrücklauf zum Wärmeerzeuger führt, ohne dass die Volumenströme durch ungewünscht zugemischtes Speicherwasser heruntergekühlt bzw. angewärmt werden.

Bei einer anderen geeigneten Ausführungsart münden die Anschlussrohre für Warmwasserzulauf und Warmwasserauslauf und/oder die Anschlussrohre für Kaltwasserzulauf und Kaltwasserauslauf in eine Vorkammer, die innerhalb oder außerhalb des Speichervolumens angeordnet ist und über jeweils mindestens eine Öffnung in einer die Vorkammer begrenzenden Vorkammerwand mit dem Speicherwasser in Verbindung steht. Die Vorkammer kann durch ein ebenes oder abgewinkeltes Blech mit Überströmöffnung innerhalb des Speichervolumens gebildet sein. Ebenso wird eine Vorkammer außerhalb des Speichervolumens offenbart, bei der die Anschlussrohre für Warmwasserzulauf und Warmwasserauslauf in einen separaten Sammler münden, der fest auf dem oberen Speicherbereich angeordnet ist und über eine Öffnung in der Speicherwand mit dem Speichervolumen in Verbindung steht. Auf der Kaltwasserseite münden die Anschlussrohre für Kaltwasserzulauf und Kaltwasserauslauf in einen separaten Verteiler, der fest auf dem unteren Speicherbereich angeordnet ist und über eine Öffnung in der Speicherwand mit dem Speichervolumen in Verbindung steht. Der Druckverlust zwischen Speicherwasser und Sammler und/oder zwischen Speicherwasser und Verteiler durch die Öffnungen in der Speicherwand kann mittels starrer und/oder beweglicher Strömungsleitelemente (Schikanen oder Sperrelemente) vor den Öffnungen eingestellt werden, sodass sich wie oben ein bevorzugter Strömungsweg am Speichervolumen vorbei ergibt.

Andererseits kann die Vorkammer auch separat und außerhalb des Speichervolumens ausgebildet sein, wobei die Anschlüsse für Zulauf und Auslauf auf der speicherabgewandten Seite der Vorkammer münden und auf der speicherzugewandten Seite zu einem Anschlussrohr zusammengefasst sind. Das Innere der Vorkammer kann Strömungsleitelemente wie Prallplatten, Sperrelemente, Strömungsschikanen oder Drosselbohrungen zur Einstellung der Druckverluste aufweisen.

Mit dieser Erfindung wird ein Pufferspeicher geschaffen, der den Exergieverlust durch Vermischung von Speicherwasser mit dem vom Wärmeerzeuger kommenden Warmwasser sowie durch Vermischung von dem aus der Heizungsanlage kommenden kühleren Wasser mit Speicherwasser minimiert. Insbesondere wenn der den Wärmeerzeugerkreis durchströmende Heizungswasser-Volumenstrom gleich oder größer dem den Wärmeverbraucherkreis durchströmende Heizungswasser-Volumenstrom ist, kommt die Wirkung deutlich zum Tragen.

Die Zeichnung stellt in 8 Figuren geeignete Ausführungen des erfindungsgemäßen Pufferspeichers schematisch dar.

Figur 1 zeigt den Stand der Technik eines Pufferspeichers und seine Einbindung in einen Wärmeerzeugerkreis und Wärmeverbraucherkreis.

Figuren 2a bis 2e zeigen erfindungsgemäße Pufferspeicher-Ausführungen mit innenliegender Zuordnung der Anschlussrohre für Zulauf und Auslauf am Beispiel des oberen Speicherbereichs.

Figuren 3a und 3b zeigen erfindungsgemäße Pufferspeicher-Ausführungen mit außenliegender Zuordnung der Anschlussrohre für Zulauf und Auslauf am Beispiel des oberen Speicherbereichs.

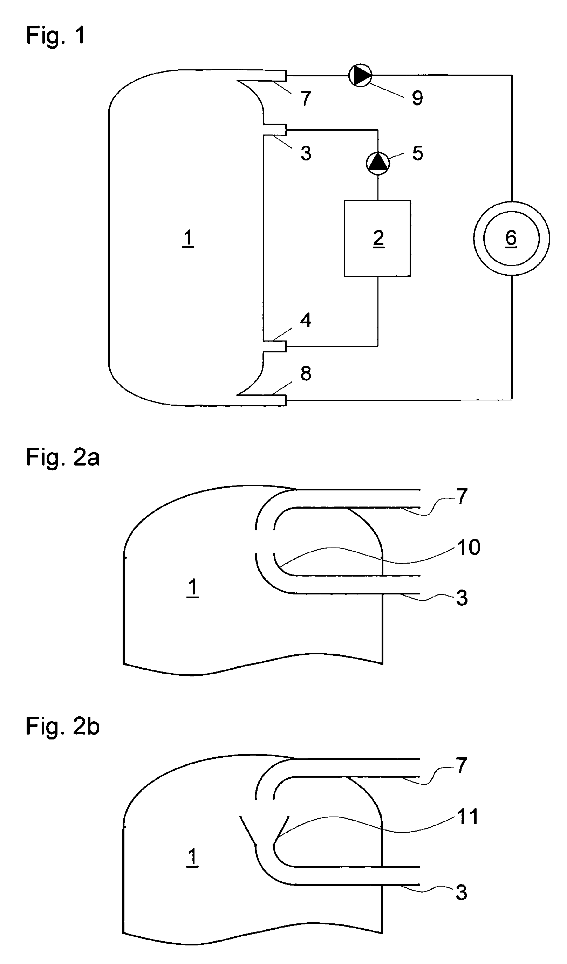

Figur 1 zeigt einen Pufferspeicher 1 nach dem Stand der Technik. Die Verbindung zum Wärmeerzeuger 2 wird über das Anschlussrohr für den Warmwasserzulauf 3 und das Anschlussrohr für den Kaltwasserauslauf 4 hergestellt. Eine Umwälzpumpe 5 fördert das Heizungswasser durch den Wärmeerzeugerkreis (Rohrleitung vereinfacht als Strich dargestellt). Die Verbindung zum Wärmeverbraucher 6 wird über das Anschlussrohr für den Warmwasserauslauf 7 und das Anschlussrohr für den Kaltwasserzulauf 8 hergestellt. Eine Umwälzpumpe 9 fördert das Heizungswasser durch den Wärmeverbraucherkreis (Rohrleitung vereinfacht als Strich dargestellt).

Die Figuren 2a bis 2e zeigen am Beispiel der Warmwasseranschlüsse im oberen Bereich des Pufferspeichers 1 erfindungsgemäße Ausführungsformen für innenliegende Zuordnungen und Gestaltungen des Zulaufs und Auslaufs. Die Geometrien und Erläuterungen sind für die Kaltwasseranschlüsse im unteren Speicherbereich sinngemäß zu übertragen.
In Figur 2a strömt das vom Wärmeerzeuger 2 (nicht dargestellt) kommende Warmwasser durch das Anschlussrohr 3 über einen Rohrbogen 10 in den Pufferspeicher 1 und direkt auf das ihm zugeordnete Anschlussrohr 7, wo es ohne Vermischung mit dem Speicherwasser abgesaugt wird.

In Figur 2b strömt das Warmwasser durch das Anschlussrohr 3 in einen die Strömung verzögernden und vergleichmäßigenden Diffusor 11, bevor es über den Eintrittsquerschnitt des Anschlussrohres 7 abgesaugt wird.

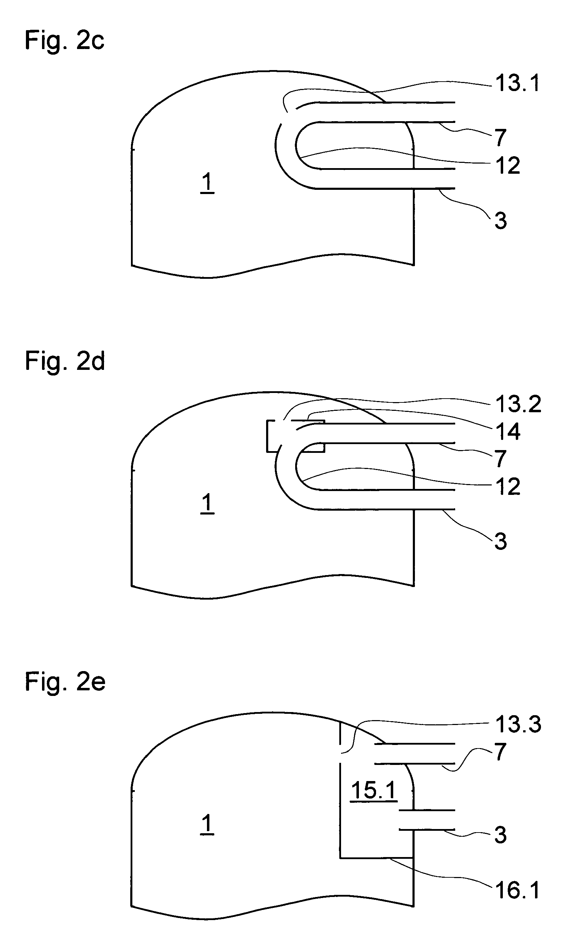

Die Figuren 2c und 2d zeigen eine mittels U-förmigem Rohrbogen 12 hydraulisch verbundene Anschlussrohr-Kombination der Anschlussrohre für Warmwasserzulauf 3 und Warmwasserauslauf 7. In der Ausführung nach Figur 2c erfolgt die Einstellung der Druckverluste über die Lage und Größe der Öffnung 13.1. In der Ausführungsform nach Figur 2d erfolgt die Einstellung der Druckverluste über die Öffnung 13.1 sowie die Gestaltung des Strömungsleitelements 14 und die Größe der Öffnung 13.2.

Figur 2e zeigt eine im Speichervolumen angeordnete Vorkammer 15.1, die von der Speicherwand und einem als Vorkammerwand 16.1 dienenden, abgewinkelten Blech gebildet wird. In der Vorkammerwand 16.1 befindet sich eine Überströmöffnung 13.3, mittels der die Druckverluste eingestellt werden.

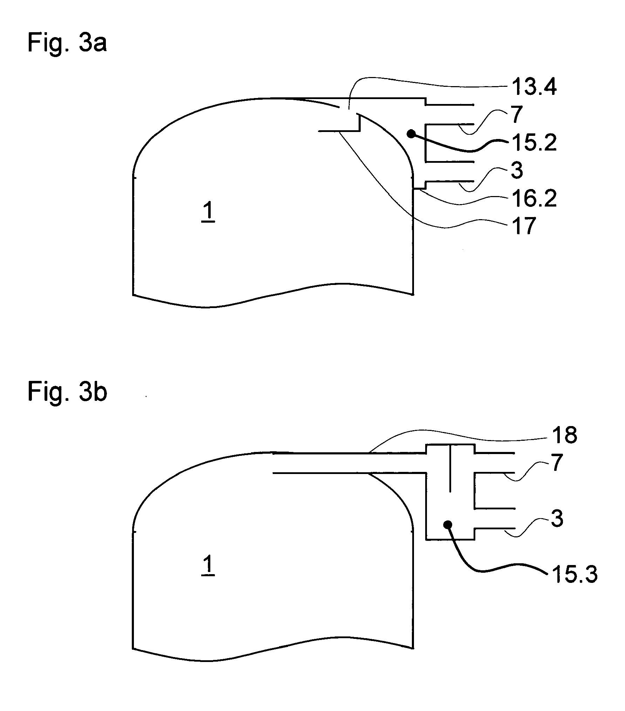

Die Figuren 3a und 3b zeigen am Beispiel der Warmwasseranschlüsse im oberen Bereich des Pufferspeichers 1 erfindungsgemäße Ausführungsformen für außenliegende Zuordnungen und Gestaltungen des Zulaufs und Auslaufs. Die Geometrien und Erläuterungen sind für die Kaltwasseranschlüsse im unteren Speicherbereich sinngemäß zu übertragen.

Figur 3a zeigt eine außenliegende, direkt an der Speicherwand angeordnete Vorkammer 15.2, die von der Speicherwand und einer Vorkammerwand 16.2 gebildet wird. In der Speicherwand befindet sich eine Überströmöffnung 13.4, mittels der die Druckverluste eingestellt werden. Ein Strömungsleitelement 17 unterstützt die temperatursensible Einschichtung des vom Wärmeerzeuger kommenden Warmwassers im Pufferspeicher 1.

Figur 3 b zeigt eine außenliegende Vorkammer 15.3 als separates Bauteil, in das die Anschlüsse für Zulauf 3 und Auslauf 7 münden, und das über ein die Anschlussrohre für Warmwasserzulauf 3 und Warmwasserauslauf 7 zusammenfassendes Rohr 18 mit dem Pufferspeicher verbunden ist.

## Patentansprüche

1. Pufferspeicher (1) für den Anschluss an eine Warmwasser-Heizungsanlage mit Wärmeerzeugerkreis und Wärmeverbraucherkreis und diesen zugeordneten Umwälzpumpen (5, 9), insbesondere für Wärmepumpen-Heizsysteme mit geringer Vorlauf/Rücklauf-Temperaturspreizung und hohen Heizungswasservolumenströmen, zur Pufferung und temperatursensibel geschichteten Speicherung von warmem Heizungswasser, mit Anschlussrohren für den Warmwasserzulauf (3) und Warmwasserauslauf (7) im oberen Speicherbereich sowie mit Anschlussrohren für den Kaltwasserzulauf (8) und Kaltwasserauslauf (4) im unteren Speicherbereich,
**dadurch gekennzeichnet, dass** die Anschlussrohre für den Warmwasserzulauf (3) und/oder den Kaltwasserzulauf (8) den Anschlussrohren für den Warmwasserauslauf (7) und/oder den Kaltwasserauslauf (4) räumlich derart zugeordnet und gestaltet sind, dass bei Betrieb der Umwälzpumpen (5, 9) im Wärmeerzeugerkreis und im Wärmeverbraucherkreis der Druckverlust zwischen Warmwasserzulauf (3) und Warmwasserauslauf (7) und/oder zwischen Kaltwasserzulauf (8) und Kaltwasserauslauf (4) geringer ist als der Druckverlust zwischen Speicherwasser und Warmwasserauslauf (7) und/oder zwischen Speicherwasser und Kaltwasserauslauf (4).

2. Pufferspeicher (1) nach Anspruch 1,
**dadurch gekennzeichnet, dass** die Anschlussrohre für Warmwasserzulauf (3) und Warmwasserauslauf (7) und/oder die Anschlussrohre für Kaltwasserzulauf (8) und Kaltwasserauslauf (4) einander direkt und im Einflussbereich der Zulauf- und Auslaufströmung innerhalb des Speichervolumens zugeordnet sind, wobei die Anschlussrohre (3, 4, 7, 8) sich bis in das Speicherinnere fortsetzen.

3. Pufferspeicher (1) nach Anspruch 1 oder 2,
**dadurch gekennzeichnet, dass** die Eintritts- und Austrittsquerschnitte der Anschlussrohre für Warmwasserzulauf (3) und Warmwasserauslauf (7) und/oder der Anschlussrohre für Kaltwasserzulauf (8) und Kaltwasserauslauf (4) im Speicherinneren im Wesentlichen einander gegenüber liegen, wobei der Abstand zwischen Eintritts- und Austrittsquerschnitten etwa im Bereich von 0,5 bis 2 Rohrdurchmessern liegt.

4. Pufferspeicher (1) nach einem der Ansprüche 1 bis 3,
**gekennzeichnet durch** einander zugeordnete Rohrbögen (10), Querschnittserweiterungen und/oder Diffusoren (11) an den Eintritts- und/oder Austrittsquerschnitten der Anschlussrohre für Warmwasserzulauf (3) und Warmwasserauslauf (7) und/oder der Anschlussrohre für Kaltwasserzulauf (8) und Kaltwasserauslauf (4).

5. Pufferspeicher (1) nach Anspruch 1 oder 2,
**dadurch gekennzeichnet, dass** die Anschlussrohre für Warmwasserzulauf (3) und Warmwasserauslauf (7) und/oder die Anschlussrohre für Kaltwasserzulauf (8) und Kaltwasserauslauf (4) im Speicherinneren durch einen U-förmigen Rohrbogen (12) hydraulisch verbunden sind, wobei eine hydraulische Verbindung zum Speicherwasser durch jeweils mindestens eine in der Anschlussrohrwand liegende Öffnung (13.1) besteht.

6. Pufferspeicher (1) nach Anspruch 5,
**dadurch gekennzeichnet, dass** der Druckverlust zwischen Speicherwasser und Warmwasserauslauf (7) und/oder zwischen Speicherwasser und Kaltwasserauslauf (4) durch die jeweils mindestens eine Öffnung (13.1) in der Anschlussrohrwand mittels starrer und/oder beweglicher Strömungsleitelemente (14) mit Öffnung (13.2) einstellbar ist.

7. Pufferspeicher (1) nach Anspruch 1,
**dadurch gekennzeichnet, dass** die Anschlussrohre für Warmwasserzulauf (3) und Warmwasserauslauf (7) und/oder die Anschlussrohre für Kaltwasserzulauf (8) und Kaltwasserauslauf (4) in eine Vorkammer (15) münden, die innerhalb oder außerhalb des Speichervolumens angeordnet ist und über jeweils mindestens eine Öffnung (13) in einer die Vorkammer (15) begrenzenden Vorkammerwand (16) mit dem Speicherwasser in Verbindung steht.

8. Pufferspeicher (1) nach Anspruch 1 oder 7,
**dadurch gekennzeichnet, dass** die Anschlüsse für Warmwasserzulauf (3) und Warmwasserauslauf (7) und/oder die Anschlüsse für Kaltwasserzulauf (8) und Kaltwasserauslauf (4) außerhalb des Speichervolumens zu einem Anschlussrohr (18), das in einer separaten außenliegenden Sammel- und Verteilkammer (15) mündet, zusammengefasst sind.

9. Pufferspeicher (1) nach einem der Ansprüche 1, 7 oder 8,
**dadurch gekennzeichnet, dass** die Anschlussrohre für Warmwasserzulauf (3) und Warmwasserauslauf (7) in einen separaten Sammler (15.2) münden, der fest auf dem oberen Speicherbereich angeordnet ist und über eine Öffnung (13.4) in der Speicherwand mit dem Speichervolumen in Verbindung steht.

10. Pufferspeicher (1) nach einem der Ansprüche 1 oder 7 bis 9,
**dadurch gekennzeichnet, dass** die Anschlussrohre für Kaltwasserzulauf (8) und Kaltwasserauslauf (4) in einen separaten Verteiler (15) münden, der fest auf dem unteren Speicherbereich angeordnet ist und über eine Öffnung (13) in der Speicherwand mit dem Speichervolumen in Verbindung steht.

11. Pufferspeicher (1) nach einem der Ansprüche 1 oder 7 bis 10,
**dadurch gekennzeichnet, dass** der Druckverlust zwischen Speicherwasser und Sammler (15.2) und/oder zwischen Speicherwasser und Verteiler (15) durch die Öffnungen (13) in der Speicherwand mittels starrer und/oder beweglicher Strömungsleitelemente (17) einstellbar ist.
